**Europäisches Patentamt**

**European Patent Office**

**Office européen des brevets**

(19)

(11) Publication number: **0 198 323**
A2

(12)

# EUROPEAN PATENT APPLICATION

(21) Application number: **86104483.2**

(22) Date of filing: **02.04.86**

(51) Int. Cl.⁴: **B 29 C 45/57**

(30) Priority: **19.04.85 IT 5327785 U**

(43) Date of publication of application: **22.10.86**
**Bulletin 86/43**

(84) Designated Contracting States: **AT BE CH DE FR GB LI
LU NL SE**

(71) Applicant: **SANDRETTO INDUSTRIE S.p.A., c/o SOFINA
S.r.l. Via Susa, 35, I-10138 Torino (IT)**

(72) Inventor: **Rodighiero, Luigi, Via Legione Gallieno, 21,
I-36100 Vicenza (IT)**

(74) Representative: **Prato, Roberto et al, c/o Ingg. Carlo e
Mario Torta Via Viotti 9, I-10121 Torino (IT)**

(54) **A plastics material injection device.**

(57) An injection device is described, of the type in which material in the plastic state is injected into a mould through a nozzle connected by a duct to an injection screw; along the duct there is provided a chamber having an oblique plunger piston operable to put the chamber under pressure or depression in consequence of its movement when a connection valve between the injection duct and the said chamber, disposed upstream of this latter, is in a closed position; a direct linear transducer is carried by the piston to indicate its position to a central control unit.

- 1 -

A Plastics Material Injection Device

The present invention relates to an injection device for synthetic materials in the plastic state, of the type operable to allow the commencement of the loading sequence of the injection screw whilst the injected material in the mould is still maintained under pressure. Various types of injection devices capable of such performance are known and characterised by the presence along the injection duct, which connects the nozzle disposed in the mould with the screw which feeds and heats the material to be injected, of a valve element operable selectively to put the said duct into communication with the injection screw and with a cylinder within which a piston is movable. After having effected injection in the conventional manner, thanks to the screw, this is reversed by a servo mechanism and recharged with resin in the solid state, and simultaneously the valve element is actuated in such a way as to interrupt any communication between the nozzle and the screw, and vice versa to connect the nozzle and the associated duct with the interior of the said cylinder in such a way that, by suitably actuating the piston it is possible to maintain in the nozzle a pressure such as to complete the injection and maintain the fluid material contained in the mould itself compressed so as to ensure correct forming of the moulded product. Known devices of the type described are not entirely free from disadvantages however; in particular although with such devices it is possible significantly to reduce the loading dead times, on the other hand there is sometimes obtained an

- 2 -

unsatisfactory quality in the mouldings; moveover, known devices are mechanically delicate, of high cost, and do not allow a good control of the stroke of the piston, causing irregularity in the values of the pressures of moulding and maintenance during recharging of the screw, which can be the cause of the said unsatisfactory quality of some products obtained with such devices.

The object of the invention is that of providing a device of the type described which will, however, have high reliability, be of relatively low cost, and which guarantees in all circumstances a good quality of moulded products.

This object is achieved by the invention in that it relates to a synthetic plastics injection moulding device comprising an injection nozzle operable to introduce the said materials into a mould, an injection duct connecting the said nozzle with a horizontally movable injection feed screw, a chamber of greater volume than that of the said ducts disposed in series along this latter immediately upstream of the said nozzle with respect to the sense of advancement imparted to the said materials by the said feed screw, and an interception valve disposed in series along the said duct upstream of the said chamber, characterised by the fact that the said chamber is provided with an oblique plunger piston operable to put the fluid contained in the said chamber under pressure or to depression in consequence of its translation movement along an oblique axis with respect to that of the said feed screw when the said valve intercepts the said duct preventing communication between the said chamber and the said screw, the said plunger piston being fixed to a direct linear transducer which is carried by a control cylinder of the said piston and is operable to determine in a continuous manner the axial position thereof.

For a better understanding of the invention there is now given a non limititive description of an embodiment with reference to the attached drawings, in which:

Figure 1 is a schematic side view of the device according to the invention;

Figures 2 and 3 are two respective longitudinal sections of respective details of Figure 1, shown on an enlarged scale; and

Figures 4 and 5 illustrate two different operating positions of the device of Figure 1.

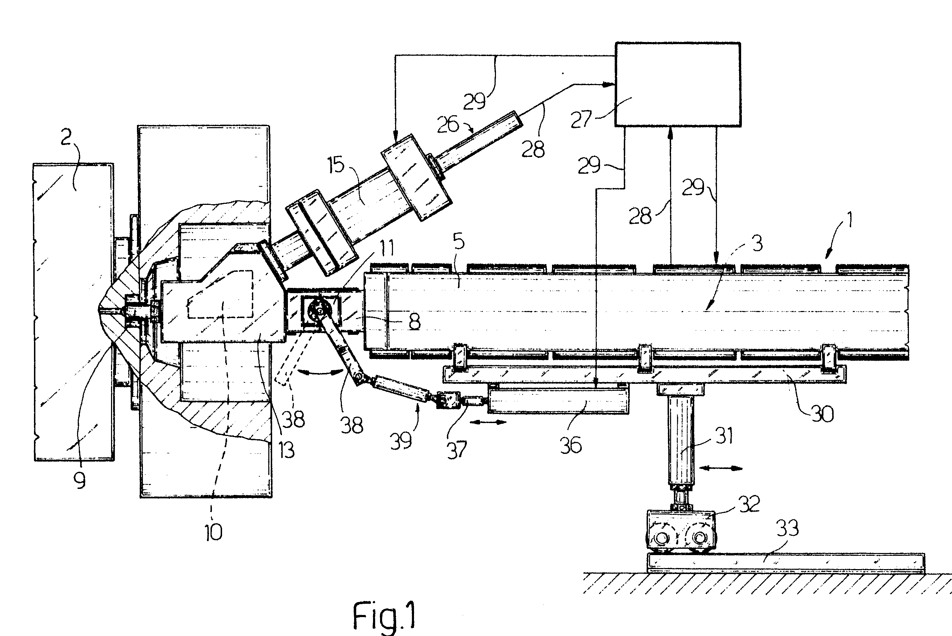

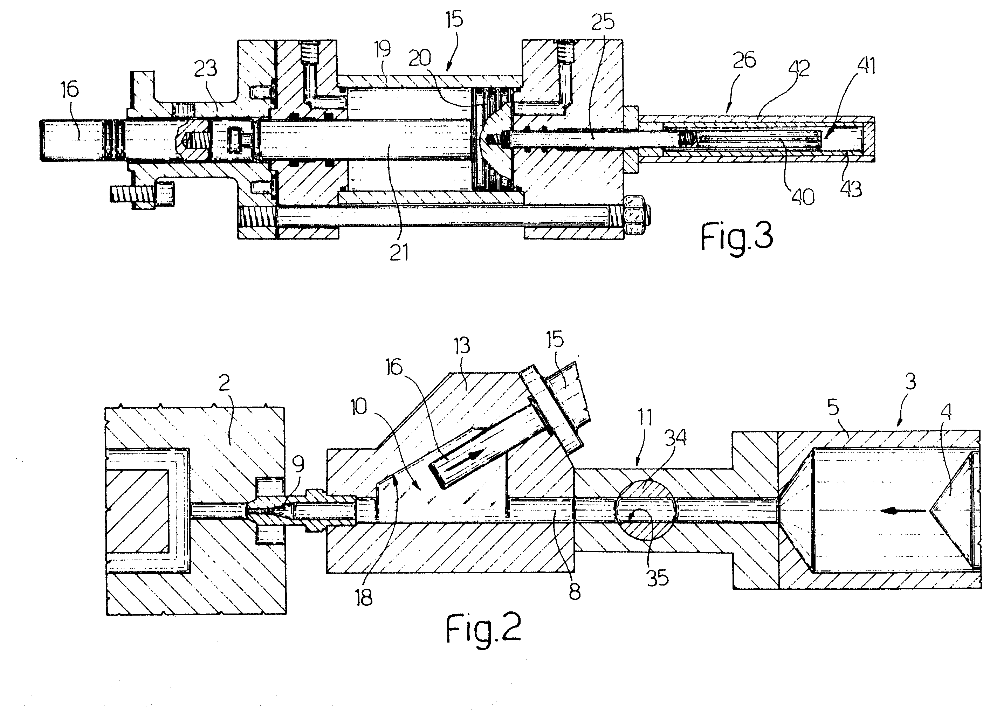

With reference to Figure 1, the injection device is generally indicated with the reference numeral 1, operable to bring a synthetic material to the plastics (fluid or semi fluid) state and to inject this into a mould 2 of known type to obtain a product, for example synthetic resin bottles. The device 1 comprises an injection screw 3 of known type, which constitutes the main injection member and which comprises a horizontally movable feed screw 4 (2, 4 and 5), a casing 5 housing the feed screw 4 and provided with a loading hopper of known type and not illustrated for simplicity, and suitable heating means also of known type and not illustrated for simplicity, operable to cause fusion or softening of the synthetic material located in the hopper in such a way that the feed screw 4 can expel this material under pressure, now in the plastic state, out from the casing 5 in an injection duct 8 connecting the screw 3 with the mould 2. The device 1 further comprises an injection nozzle 9 of known type positioned at the free end of the duct 8 and partially housed in the mould 2, at an intermediate chamber 10 disposed in series along the duct 8, and an interception valve 11 also disposed in series along the duct 8, but upstream of the chamber 10 with reference to the direction of advancement of the material to be injected, indicated with an arrow in Figure 2; since this direction of advancement is imparted to the material by the horizontal translation of the feed screw 4, the valve 11 is therefore disposed between the screw 3 and the chamber 10 and this latter is disposed upstream of the nozzle 9.

According to the invention the chamber 10 is formed within a block 13 which can be interposed between the screw 3 and the nozzle 9, has a greater volume than the overall volume of the duct 8 and has a longitudinal section of substantially rectangular trapezoidal form in such a way that the chamber 10 is tapered towards the nozzle 9; on the outside of the body 13 is fixed, in an oblique position with respect to the axis of the screw 3 which is horizontal, a linear actuator 15, preferably constituted by an hydraulic cylinder operable to control the translation, along an oblique axis with respect to the direction of advancement of the feed screw 4, of an oblique plunger piston 16 which can move in the chamber 10 parallel to an oblique wall 18 of this, to vary its volume. With reference to Figure 3, the actuator 15 is known and comprises a casing 19 within which slides a piston 20 connected rigidly through a piston rod 21 to the piston 16; this is housed slidably within a guide sleeve 23 which also serves as an attachment element for the casing 19 to the body 13 and is connected in a direct

- 5 -

manner, through a rod 25 screwed into the piston 20 and which therefore is fixed rigidly and coaxially to the piston 16, to a linear transducer 26, preferably of electromagnetic type, the principle of operation of which is known, operable to indicate at any instant the axial position of the piston 16 to a central control unit 27 of the device 1, of any known type and preferably electronic, which is able to receive signals from the transducer 26 and from other suitable position indicaters of the feed screw 4 through lines 28, and consequently to control, through lines 29 the operation of the actuator 15, the valve 11 and the screw 3.

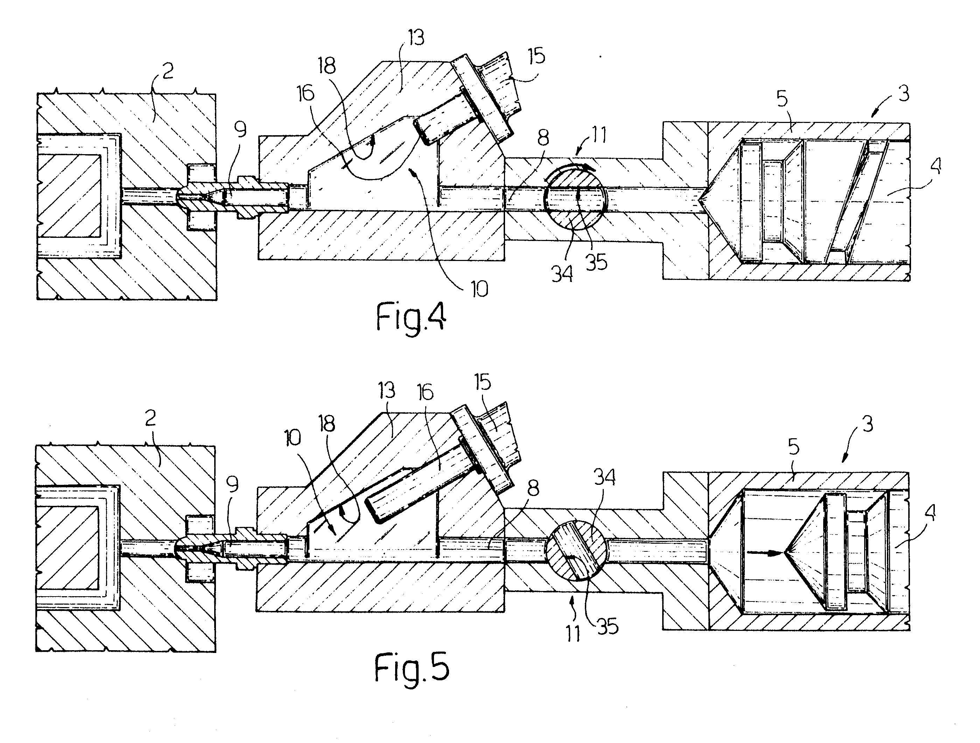

According to the invention the injection screw 3 is mounted on a horizontally movable support 30 which is provided with legs 31 which are adjustable in height and of known type mounted on roller skids 32 slidable along rectilinear guides 33; the valve 11 is constituted by a rotatable valve plug 34 disposed at 90° through the duct 8 and provided with a transverse hole 35 which, with the valve 11 in the open position (Figures 2 and 4) is coaxial with the duct 8 and communicating therewith, and which with the valve 11 in a closed position (Figure 5) is disposed transversely of the duct 8 in such a way as to interrupt it; rotation of the valve plug 34 to open or close the valve 11 is controlled by a linear actuator 36 disposed with its axis parallel to that of the screw 3, carried by the support 30 and provided with an actuator arm 37 connected to a radial lever 38 for control of the valve plug 34, which is rigidly angularly fixed to this latter and is connected to the actuator arm 37 in such a way as to be rotated in the direction of the arrows (Figure 1) in consequence of the translation of the

- 6 -

actuator arm 37 by means of an articulated transmission
linkage 39. The transducer 26 comprises a soft iron
metal rod 40 fixed by screws to the shaft 25 and
therefore rigidly connected to and coaxial with the
oblique piston 16, and an electromagnet 41 which is
housed in an associated casing 42 within which there is
mounted axially fixed to the piston 16 and to the
associated rod 40, an inducter 43; this, together with
the rod 40 which moves coaxially within it constitutes
the electromagnet 41 of which the movable rod 40 is the
core.

The operation of the device 1 is as follows:

During a first phase the synthetic material is introduced
into the screw 3 is brought to the fluid state disposed
at the head of the feed screw 4 and caused to advance
into the duct 8 by the movement of the feed screw 4 which
advances in the direction of the arrow (Figure 2) along
its axis; whilst this phase it taking place the valve 11
is in the open position so that the fluid material
arrives at the chamber 10 of varible volume, fills it and
then pulses to the nozzle 9 where it is injected into the
mould 2; during this first phase the piston 16 is located
in a withdrawn position, almost all of it being housed in
the chamber 10, and the actuator 15 is disactivated so
that the piston 20 is free to move in the casing 19 under
the thrust exerted by the pressure of the fluid material
being injected in the chamber 10, on the piston 16, thus
causing the a retraction of this latter with a consequent
increase in the volume and the complete filling of the
chamber 10 until it reaches a predetermined volume which
is detected by the central control unit 27 thanks to signals emitted by the transducer 26 as a result of the displacement of the pistons 16. The achievement of this volume in fact implies that the piston 16 has reached a predetermined end of stroke height, which is promptly indicated by the transducer 26 to the central control unit 27, which consequently activates the actuator 15 establishing on the piston 20 a pressure such as to balance instant by instant, the pressure exerted in the opposite sense on the piston 16 by the fluid material being injected, whereby to stop the retraction of the piston 16 and consequently stablise the volume of the chamber 10 at the desired predetermined value with extreme precisions.

The activation of the actuator 15 allows the screw 3 to complete the injection with consequent filling of the mould 2; the completion of the injection is indicated to the central control unit 27 by means of suitable sensors connected on lines 28 operable to detect for example the magnitude of advancement of the feed screw 4 or, preferably, the pressure in the chamber 10 which, obviously, with the piston 16 locked and the mould 2 full tends to increase with a continuation of the injection. As soon as the mould 2 is full, therefore, the central control unit 27 locks the feed screw 4 and, according to the invention, actuates, by means of suitable servo mechanisms of known type and not illustrated for simplicity, the actuator 36 and the cylinder or actuator 15, simultaneously causing closure of the valve 11 and commutation of the hydraulic pressure on the piston 20 to a value greater than that of the pressure existing in the chamber 10, with consequent introduction into oblique position of the piston 16 in the chamber 10, and reduction of the volume available for the fluid material which, not being able to return towards the screw 3 because of the closure of the valve 11, is put further under pressure and thrust further into the mould 2 thus compensating the possible contraction by solidification. The correct injection pressure is guaranteed by the transducer 26, which continuously indicating the position of the piston 16 to the central control unit 27, with precision and, above all, without delay, permits this latter to regulate with precision the pressure on the piston 20. Finally, the central control unit 27 caused the feed screw 4 to rotate and disactivates the advancement actuators of this latter leaving it free to retract and thus prearranging the screw 3 for loading and plastification of new material, whilst the piston 16, thanks to the closure of the valve 11, maintainsa the injection pressure in the mould to until solidification of the a injection material is complete. This allows a significant reduction of the cycle times of the machine in that it allows part of the loading cycle of material to be superimposed over the pressure maintenance cycle after injection, which is effected by the piston 16 rather than by the screw 3 as in devices which do not have interception valves in the duct 8. When solidification is complete the mould 2 is opened, the valve 11 turned to the open position and the actuator 15 disactivated so that a new cycle can be performed.

With respect to known devices capable of operating in a similar manner to that described above, the device of the invention has surprisingly shown a much higher operating reliability and above all has allowed the production, in the course of experimental tests, of moulded products of better quality. The applicant considers that these new and surprising results are due to the presence, in combination, in the device according to the invention, of a piston of plunger type movable obliquely with respect to the injection screw, of a chamber for receiving the piston of relatively large volume and, in any case, greater than that of the injection duct, and of a direct linear transducer disposed directly on the piston itself. It is the combination of these three elements in a single device, in fact, which has permitted the applicant to obtain the desired results.

From what has been described the advantages connected with the injection device according to the invention will be apparent; it is to be emphasised, moreover, that not only does it provide a high reliability and allow products of higher quality to be obtained, but thanks to the described structure the constructional costs are also contained and the device can be easily assembled and maintenance is rapid and easy in that the screw 3 can be easily dismantled and separated from the mould 2 and/or from the body 13 thanks to the presence of the skids 32 and its position accurately adjusted by means of the legs 31.

Finally, it is clear that what has been described can be modified and varied without departing from the scope of the invention

- 10 -

CLAIMS

1.    A plastics material injection moulding device, comprising an injection nozzle operable to introduce plastics materials into a mould, an injection duct connecting the said nozzle to a horizontally movable injection feed screw, a chamber of greater volume than that of the said duct disposed in series along this latter immediately upstream of the said nozzle with reference to the direction of advancement imparted to the said materials by the said feed screw, and an interception valve disposed in series along the said duct upstream of the said chamber, characterised by the fact that the said chamber is provided with an oblique plunger-type piston operable to put the fluid contained in the said chamber under pressure or depression, in consequence of its translation movement along an axis obliquely positioned with respect to that of the said feed screw, when the said valve intercepts the said duct preventing communication between the said chamber and the said screw, the said plunger-type piston being attached to a direct linear transducer which is carried by a control cylinder for the said piston and is operable to determine in a continuous manner the axial position thereof.

2.    A device according to Claim 1, characterised by the fact that it further comprises a central control unit operable automatically to control the closure of the said valve in dependence on signals from respective transducer devices in such a way as to intercept the said duct and to control actuation of the said plunger-type piston control cylinder in dependence on signals from the

0198323

- 11 -

said direct linear transducer.,

3. A device according to Claim 1 or Claim 2, characterised by the fact that the said valve is constituted by a rotatable valve plug disposed at 90° across the said duct and provided with a transverse hole which, with the said valve in open position is coaxial with the said duct and communicating therewith, and which with the said valve in closed position is disposed transversely of the said duct in such a way as to interrupt it, rotation of the said valve plug to open or close the said valve being controlled by a linear actuator disposed with its axis parallel to that of the said feed screw and the actuator arm of which is connected to a radial control lever of the said valve plug by means of an articulated transmission linkage.

4. A device according to any of the preceding Claims, characterised by the fact that the said feed screw forms part of an injection screw which is mounted on a horizontally movable support provided with legs which are adjustable in height and mounted on skids having rollers slidable along rectilinear guides.

5. A device according to any preceding Claim, characterised by the fact that the said direct linear transducer is of electromagnetic type and comprises a metal shaft rigidly fixed to and coaxial with the said plunger-type piston and an electromagnet axially fixed with respect to the piston and the core of which is constituted by the piston rod.

Fig.1

Fig.3

Fig.2

0198323

Fig.4

Fig.5

0198323